# EUROPÄISCHE PATENTSCHRIFT

(11) **EP 2 453 174 B1**
(45) Veröffentlichungstag und Bekanntmachung des Hinweises auf die Patenterteilung: **01.03.2017**
(21) Anmeldenummer: 11188879.8
(22) Anmeldetag: 11.11.2011
(51) Int. Cl.: F23D 14/12, F23L 15/04

(54) **Strahlungsheizrohrbrenner-Vorrichtung mit interner und externer Rekuperation**
Radiant tube burner device with internal and external recuperation
Dispositif de brûleur a tube rayonnant avec récupération interne et externe

(30) Priorität: 13.11.2010 DE 102010051347
(43) Veröffentlichungstag der Anmeldung: 16.05.2012
(73) Patentinhaber: Messer Austria GmbH, 2352 Gumpoldskirchen (AT)
(72) Erfinder: Potesser, Michael, 1020 Wien (AT)
(74) Vertreter: Münzel, Joachim R.

(56) Entgegenhaltungen:
- EP-A1- 1 076 207
- WO-A1-2004/029511
- US-A1- 2009 269 710
- ANDREAS MUNKO ET AL: "Neue Brennertechnik für Strahlheizrohre in Thermoprozessanlagen", BWK 54 (2002), NR. 9, 30. September 2002 (2002-09-30), Seite 23, XP55020761,

## Beschreibung

Die Erfindung betrifft eine Vorrichtung zum Oxidieren von Brennstoffen, mit einem in eine Wand eines Ofenraums eingebauten Brenner, der einen in einen Reaktionsraum einmündenden Brennstoffkanal und wenigstens einen Oxidationsmittelkanal zum Zuführen von Brennstoff bzw. Oxidationsmittel, einen Brenngasabzugskanal zum Abführen von Brenngas aus dem Reaktionsraum und einen den Brenngasabzugskanal mit dem Oxidationsmittelkanal und dem Brennstoffkanal thermisch verbindende Wärmetauscherflächen umfassenden ersten Rekuperator aufweist, wobei der Brenner außerhalb des Ofenraums an eine mit dem Brenngasabzugskanal strömungsverbundene Abgasleitung, eine mit dem Brennstoffkanal strömungsverbundene Brennstoffzuleitung und eine mit dem Oxidationsmittelkanal strömungsverbundene Oxidationsmittelzuleitung angeschlossen ist. Die Erfindung betrifft des Weiteren ein entsprechendes Verfahren zum Oxidieren von Brennstoffen.

Die Beheizung von Ofenräumen mit direkter oder indirekter Beheizung durch die Oxidation von Brennstoffen ist bekannt. Bei der direkten Beheizung wird mittels eines Brenners ein Brennstoff, beispielsweise Öl oder Erdgas, und einem Oxidationsmittel, beispielsweise Luft oder Sauerstoff in den Ofenraum eingetragen und dort verbrannt. Die entstehenden Brenngase werden anschließend über einen Brenngasabzugskanal abgeführt. Für viele metallurgische Anwendungen bedarf es einer indirekten Beheizung des Ofenraums, die nach dem Stand der Technik meist mit elektrischen Heizungen oder Strahlheizrohren bewerkstelligt wird. Strahlheizrohre werden üblicherweise mit Gas- oder Ölbrennern unter Einsatz von Luft oder einem sauerstoffreichen Gas als Oxidationsmittel befeuert, die innerhalb eines aus Metall oder einem keramischen Material bestehenden Strahlheizrohres aufgenommen sind. Der Eintrag der Wärmeenergie in den Ofenraum erfolgt durch Strahlung oder Konvektion der sich an der Außenoberfläche des Strahlrohr aufheizenden Ofenraumatmosphäre, ohne dass es zu einem direkten Kontakt der Brenngase mit der Ofenraumatmosphäre kommt. Die Brenngase werden unmittelbar aus dem Strahlrohr über einen Brenngasabzugskanal abgeführt.

Ein Beispiel für ein für Ölfeuerung ausgelegtes Strahlheizrohr findet sich in dem Fachartikel von A. Munko, F. Kleine Jäger, H. Köhler: "Neue Brennertechnik für Strahlheizrohre in Thermoprozessanlagen", BWK 54 (2002) Nr. 9. Bei dem dort beschriebenen Gegenstand wird ein Gemisch aus Primärluft und Brennstoff in einem Verdampfungsrohr vermischt und derart erhitzt, dass der flüssige Brennstoff verdampft. Die hierbei benötigte Wärme wird vom heißen Abgas, Wärmeübergang von heißen Brennerkomponenten und stromauf gerichteter Wärmestrahlung bereitgestellt. Am Ausgang des Verdampfungsrohrs wird das Brennstoff-Luft-Gemisch unverbrannt in ein sich an das Verdampfungsrohr anschließendes Flammenrohr eingetragen dort mit Sekundärluft in Kontakt gebracht, die in einem innerhalb des Strahlheizrohres angeordneten Rekuperatur durch Wärmetausch mit dem Abgas vorgewärmt wurde. Im Flammenrohr erfolgen die Vermischung der Gasströme und die anschließende Verbrennung. Brenner und Flammenrohr sind dabei so konstruiert, dass im stationären Betrieb des Strahlheizrohrs die bei der Verbrennung entstehenden Brenngase teilweise rückgeführt und gemeinsam mit dem Brennstoff-Luft-Gemisch in das Flammenrohr eingetragen wird (Rezirkulation).

In der US 2005/0239005 A1 wird eine Apparatur zur Wärmebehandlung beschrieben, die als Strahlheizrohr oder Brenner ausgeführt sein kann und bei der als Oxidationsmittel Sauerstoff mit einer Reinheit von mindestens 80Vol-% zum Einsatz kommt. Die Verbrennung mit Sauerstoff bzw. einem Gas mit einem Sauerstoffanteil, der höher als der in Luft ist, anstelle von Luft führt zu verringerten NOₓ-Konzentrationen im Abgas. Auch hier erfolgt eine Rezirkulation des Abgases sowie eine Vorwärmung des zugeführten Sauerstoffs durch Wärmetausch mit dem abgeführten Brenngas in einem innerhalb des Brenners angeordneten Rekuperator.

Auch die WO 2004/029511 A1 zeigt ein Strahlheizrohr mit Rezirkulation des Abgases sowie einem inneren Rekuperator, bei dem die Restwärme des Abgases über die Außenwände der das Oxidationsmittel führende Rohrleitungen auf das Oxidationsmittel übertragen wird.

Die US 2009/0269710 A1 beschreibt gleichfalls ein Strahlheizrohr, das mit einem inneren Rekuperator ausgerüstet ist. Bei diesem Gegenstand werden die Abgase durch ein zentral angeordnetes Rohr geleitet, dessen Wände als Wärmetauscherflächen zum Vorheizen des außen am Abgasrohr vorbei geleiteten Oxidationsmittels oder Brennstoffs genutzt werden.

Aufgabe der Erfindung ist es, die Effizienz der Verbrennung bei Verwendung eines Rekuperatorbrenners weiter zu erhöhen.

Gelöst wird diese Aufgabe durch eine Vorrichtung mit den Merkmalen des Patentanspruchs 1 und durch ein Verfahren mit den Merkmalen des Patentanspruchs 6.

Eine Vorrichtung der eingangs genannten Art und Zweckbestimmung besitzt also die Eigenschaften, dass der Brenner außerhalb des Ofenraums an eine mit dem Brenngasabzugskanal strömungsverbundene Abgasleitung, eine mit dem
Brennstoffkanal strömungsverbundene Brennstoffzuleitung und eine mit dem Oxidationsmittelkanal strömungsverbundene Oxidationsmittelzuleitung angeschlossen ist, wobei die Abgasleitung mit der Oxidationsmittelzuleitung und der Brennstoffzuleitung an in einem zweiten Rekuperator vorgesehenen Wärmetauscherflächen thermisch miteinander verbunden sind.

Im erfindungsgemäße Brenner findet also eine zweistufige Vorwärmung statt, wobei eine erste Stufe außerhalb des Ofenraums bei der Zuführung des Oxidationsmittels bzw. des Brennstoffs an den Brenner (zweiter Rekuperator) und eine zweite Stufe innerhalb des Brenners (erster Rekuperator) erfolgt. Durch den ersten Rekuperator wird innerhalb des Ofenraumes ein Teil der Wärme des Brenngases auf das Oxidationsmittel und/oder den Brennstoff übertragen. Wird dabei das Oxidationsmittel im Brenner bzw. dem ersten Rekuperator durch mehrere Oxidationsmittelkanäle geführt, sind in der Regel auch alle Oxidationsmittelkanäle thermisch mit dem rückgeführten Brenngas verbunden. Durch die Anordnung eines zweiten Rekuperators außerhalb des Ofenraums kann auch die nach Durchlaufen des ersten Rekuperators im Brenngas enthaltene Restwärme zur Vorwärmung des Oxidationsmittels und/oder des Brennstoffs genutzt werden. Durch die Vorwärmung wird die Verbrennungseffizienz weiter gesteigert. Im Unterschied zu Rekuperatorbrennern nach dem Stande der Technik besteht nach der Erfindung die Möglichkeit, nicht nur das Oxidationsmittel, sondern auch den Brennstoff im ersten und/oder im zweiten Rekuperator vorzuwärmen. Der erfindungsgemäße Brenner ist insbesondere in Öfen für die metallurgische Wärmebehandlung einsetzbar.

Als Reaktionsraum kommt der gesamte Ofenraum in Betracht, sofern der Brennstoff und das Oxidationsmittel direkt in den Ofenraum eingetragen und das Brenngas aus dem Ofenraum zumindest teilweise durch einen im Brenner vorgesehenen Brennstoffabzugskanal mit erstem Rekuperator abgeführt wird. Eine besonders vorteilhafte Weiterbildung der Erfindung sieht jedoch vor, dass als Reaktionsraum ein dem Brenner zugeordnetes Strahlheizrohr vorgesehen ist. Die Verbrennung erfolgt also nicht im Ofenraum, sondern innerhalb des nach außen geschlossenen Strahlheizrohres, und die Erwärmung des Ofenraumes erfolgt indirekt durch die vom Strahlheizrohr ausgehende Strahlung bzw. konvektiv, durch Erwärmung der mit der Außenoberfläche des Strahlheizrohrs in Kontakt tretenden Ofenraumatmosphäre. Bevorzugt ist als Oxidationsmittel Sauerstoff vorgesehen. Als "Sauerstoff" wird hier ein Gas mit einem Sauerstoffanteil von mindestens 90 Vol.-%, bevorzugt mindestens 95 Vol.-% verstanden. Die Verwendung von Sauerstoff anstelle von Luft führt einerseits zu niedrigeren NOₓ-Konzentrationen im Abgas, andererseits zu höheren Flammentemperaturen und demzufolge höheren Temperaturen im Abgas, aufgrund dessen die zweistufige Vorwärmung besonders wirtschaftlich wird.

Als Brennstoff kann ein gasförmiger Brennstoff wie beispielsweise Erdgas, vorgesehen sein, jedoch können auch flüssige oder pulverförmige Brennstoffe wie beispielsweise Öl oder Kohlestaub zum Einsatz kommen. Insbesondere bei der Verwendung von Sauerstoff als Oxidationsmittel eignet sich die erfindungsgemäße Vorrichtung aber auch zur Verbrennung von niederkalorischen Brennstoffen. Als "niederkalorische Brennstoffe" sollen hier Brennstoffe verstanden werden, die mit weniger als 35 MJ/kg, insbesondere zwischen 1,5 und 20 MJ/kg einen deutlich geringeren Brennwert als Erdgas oder Heizöl aufweisen, insbesondere gasförmige Brennstoffe wie Gichtgas, Stadtgas, Koksofengas oder Konvertergas. Um den Brennwert zu erhöhen können auch Mischungen zum Einsatz kommen, wie beispielsweise eine Mischung von Erdgas mit einem oder mehreren der genannten oder einem anderen niederkalorischen Brennstoff, wobei sich im Ergebnis ein Brennstoff ergibt, dessen Brennwert zwischen Erdgas und dem oder den eingesetzten niederkalorischen Brennstoff(en) liegt.

Eine abermals vorteilhafte Weiterbildung der Erfindung sieht vor, dass innerhalb des Brennergehäuses zwecks Ermöglichung einer gestuften Verbrennung Kanäle für ein erstes und ein zweites Oxidationsmittel vorgesehen sind, die jeweils mit Oxidationsmittelzuführungen für ein erstes bzw. zweites Oxidationsmittel strömungsverbunden sind. Durch die gestufte Verbrennung kann die Flammentemperatur reguliert werden. Im Falle eines Strahlheizrohrs als Reaktionsraum wird so insbesondere ein Überhitzen des Strahlheizrohrs vermieden. Dabei können eine oder beide Oxidationsmittelzuführungen im zweiten Rekuperator mit der Abgasleitung thermisch verbunden sein. Ebenso kann ein oder können beide Oxidationsmittelkanäle im ersten Rekuperator innerhalb des Brenners mit dem Brenngasabzugskanal thermisch verbunden sein, also jeweils eine Vorwärmung von beiden oder nur eines der Oxidationsmittel erfolgen.

Die Aufgabe der Erfindung wird auch durch ein Verfahren mit den Merkmalen des Anspruchs 6 gelöst.

Nach dem erfindungsgemäßen Verfahren werden zwecks Erwärmung eines Ofenraums ein Brennstoff und ein Oxidationsmittel durch einem Brenner zugeordnete Zuführungskanäle für Brennstoff bzw. Oxidationsmittel einem Reaktionsraum zugeführt und dort unter Entstehung eines Reaktionsprodukts (Brenngas) zur Reaktion gebracht. Das bei der Reaktion entstehende Brenngas wird über einen Brenngasabzugskanal abgeführt,
wobei an Wärmetauscherflächen eines innerhalb des Brenners angeordneten ersten Rekuperators die Wärme des Brenngases teilweise auf das dem Reaktionsraum zuzuführende Oxidationsmittel und/oder dem Brennstoff übertragen wird. Das nach wie vor eine hohe Wärmeenergie aufweisende Brenngas wird anschließend außerhalb des Ofenraums in einem zweiten Rekuperator vorgesehenen Wärmetauscherflächen zugeführt und dort in Wärmeaustausch mit dem, dem ersten Rekuperator zuzuführenden, Oxidationsmittel und Brennstoff gebracht. Durch den erfindungsgemäßen zweistufigen Ablauf der Rekuperation wird die Abwärme des Brenngases besonders effizient genutzt.

In einer vorteilhaften Weiterbildung des erfindungsgemäßen Verfahrens wird ein Teilstrom des Brenngases dem Oxidationsmittel und/oder dem Brennstoff zugemischt und auf diese Weise zur Rezirkulation gebracht. Innerhalb des Brenners sind in diesem Fall Strömungsverbindungen zwischen dem Brenngasabzugskanal und den Zuführungskanälen für Oxidationsmittel und/oder zugeführten Brennstoff vorgesehen, die im Betrieb des Brenners die Rezirkulation eines Teilstroms des Brenngases ermöglichen. Derartige Strömungsverbindungen sind an sich bekannt und beispielsweise in der US 2005/0239005 A1 beschrieben.

Besonders vorteilhaft werden die Ströme von Oxidationsmittel, Brennstoff und rezirkuliertem Brenngas so gesteuert, dass innerhalb des Reaktionsraums eine flammenlose Verbrennung erfolgt, aufgrund der besonders niedrige NOₓ-Konzentrationen im Abgas erzielt werden.

Für den Betrieb des erfindungsgemäßen Brenners ist eine Überschalleindüsung von Brennstoff und/oder Oxidationsmittel im Rahmen der Erfindung nicht ausgeschlossen, jedoch sieht eine bevorzugte Ausgestaltung des erfindungsgemäßen Verfahrens eine deutlich subsonische Zuführung von Brennstoff und/oder Oxidationsmittel in den Reaktionsraum vor, mit einer Geschwindigkeit von bevorzugt unter 0,5 Mach. Ein nach dem erfindungsgemäßen Verfahren arbeitender Brenner kommt somit in dieser Ausgestaltung ohne aufwändige Überschalltechnologie, wie beispielsweise Lavaldüsen aus.

Um das erfindungsgemäße Verfahren besonders effizient zu gestalten, wird durch den Wärmetausch mit dem Brenngas im ersten und zweiten Rekuperator das Oxidationsmittel bevorzugt auf mindestens 800°C, besonders bevorzugt auf mindestens 1000°C, und der Brennstoff auf mindestens 400°C vorgewärmt.

Das Brenngas wird beim Wärmetausch mit dem Oxidationsmittel und/oder dem Brennstoff in den beiden Rekuperatoren bevorzugt auf eine Temperatur von weniger als 100°C, bevorzugt unter 80°C abgekühlt, das heißt, der erfindungsgemäße Brenner kann als Brennwertbrenner betrieben werden.

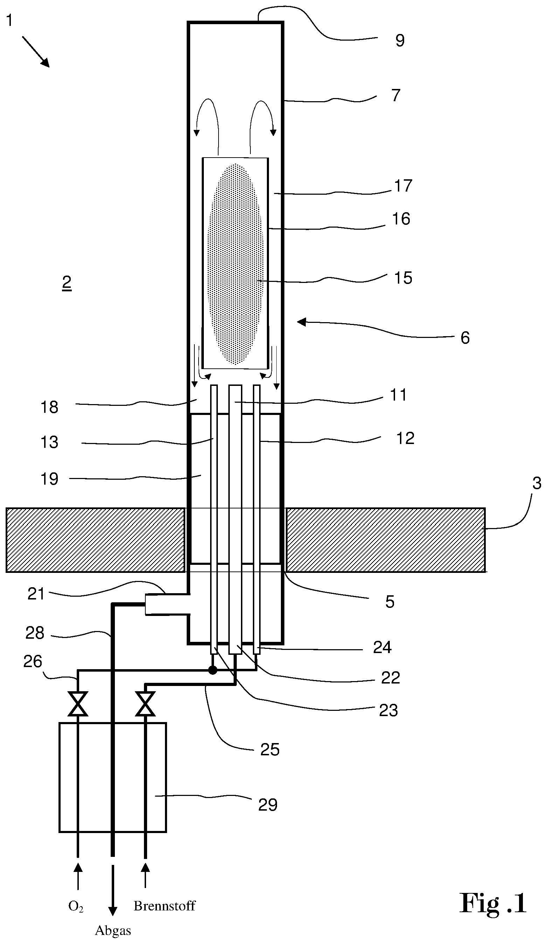

Anhand der Zeichnung soll ein Ausführungsbeispiel der Erfindung näher erläutert werden. In schematischer Ansicht zeigt die einzige Figur (Fig. 1) einen Ofen mit einem als Strahlheizrohr ausgebildeten erfindungsgemäßen Brenner im Längsschnitt.

Der in der Zeichnung veranschaulichte Ofen 1 weist einen Ofenraum 2 auf, der von einer hier nur abschnittsweise gezeigten Ofenwand 3 umschlossen wird. In der Ofenwand 3 ist eine sich senkrecht zur Innenoberfläche der Ofenwand 3 durch diese hindurch erstreckende Durchgangsöffnung 5 vorgesehen, in der ein Brenner 6 montiert ist.

Der sich teilweise in den Ofenraum 2 hinein erstreckende Brenner 6 ist vom Ofenraum 2 und von der Durchgangsöffnung 5 durch ein Mantelrohr 7 abgegrenzt, das bei der Ausbildung des Brenners 6 als Strahlheizrohr, wie in der Zeichnung gezeigt, eine geschlossene Vorderwand 9 besitzt. In einem der Ofenwand 3 benachbarten hinteren Abschnitt des Brenners 6 sind Zuführkanäle 11, 12, 13 für Brennstoff (11) bzw. Oxidationsmittel (12, 13) vorgesehen, während der Vorderabschnitt des Innenraums des Mantelrohrs 7, zwischen den Ausmündungen der Zuführkanäle 11, 12, 13 und der Vorderwand 9, einen Reaktionsraum 15 bildet, in welchem beim Betrieb des Brenners 6 eine Oxidation des zugeführten Brennstoffs erfolgt. Der Reaktionsraum 15 umfasst dabei in der Regel den ganz überwiegenden Teil des vom Mantelrohr 7 umschlossenen Volumens.

Die Zuführkanäle 11, 12, 13 umfassen einen zentralen Brennstoffkanal 11 zur Zuführung von Brennstoff, an dem radial außenseitig eine Anzahl, beispielsweise vier, sechs oder acht, von in Umfangsrichtung gleichmäßig beabstandeten Oxidationsmittelkanälen 12,13 vorgesehen sind, von denen in der Schnittansicht in Fig. 1 freilich nur zwei einander gegenüberliegende Kanäle gezeigt sind. Der Brennstoffkanal 11 und die Oxidationsmittelkanäle 12, 13 münden auf ihren dem Reaktionsraum 15 zugewandten Mündungsöffnungen im Wesentlichen bündig miteinander aus.

Innerhalb des Reaktionsraumes 15 ist ein Flammenrohr 16 angeordnet, das axial beabstandet vor den Mündungsöffnungen des Brennstoffkanals 11 bzw. der Oxidationsmittelkanäle 12, 13 angeordnet ist, und das einen inneren Radius aufweist, der derart bemessen ist, dass das aus den Oxidationsmittelkanälen 12, 13 ausströmende Oxidationsmittel zumindest ganz überwiegend in das Flammenrohr 16 hineinströmt. Zwischen Flammenrohr 16 und Innenwand des Mantelrohrs 7 besteht ein Ringspalt 17, der das Rückströmen des bei der Oxidation des Brennstoffs entstehenden Reaktionsprodukts (Brenngas) ermöglicht. Im hinteren Bereich des Mantelrohrs 8 dient der Bereich um den Brennstoffkanal 11 bzw. den Oxidationsmittelkanälen 12, 13 als Abzugskanal 18 für den Abzug der Brenngase aus dem Reaktionsraum 15. Innerhalb dieses Abzugskanals 18 ist ein Rekuperator 19 angeordnet. Der Rekuperator 19 ist in an sich bekannter Weise ausgestaltet und umfasst Wärmetauscherflächen, beispielsweise Rippen, mittels denen der Abzugskanal 18 mit der Brennstoffzuleitung 11 und den Oxidationsmittelleitungen 12, 13 thermisch verbunden ist.

Zur Einleitung von Brennstoff bzw. Oxidationsmittel in die Zuführungskanäle 11, 12, 13 sowie zum Abführen der Brenngase aus dem Abzugkanal 18 ist der Brenner 6 auf seiner vom Ofenraum 2 entgegen gesetzten Endabschnitt mit einem Abgasstutzen 21 sowie mit Anschlüssen 22, 23, 24 für Brennstoff bzw. Oxidationsmittel versehen. Dabei ist der Brennstoffkanal 11 über einen Anschluss 22 mit einer Brennstoffzuleitung 25 verbunden, während die Oxidationsmittelkanäle 12, 13 über Anschlüsse 23, 24 an eine gemeinsame, sich vor Erreichen der Anschlüsse 23, 24 verzweigende Oxidationsmittelzuleitung 26 angeschlossen sind. Der Abgasstutzen 21 ist mit einer Abgasleitung 28 verbunden, die im weiteren Verlauf an hier nicht gezeigte Einrichtungen zum Reinigen des Abgasstroms angeschlossen ist. Die Abgasleitung 28 sowie die Brennstoffzuleitung 25 und die Oxidationsmittelzuleitung 26 durchlaufen einen zweiten Rekuperator 29, in dem hier nicht gezeigte Wärmetauscherflächen vorgesehen sind, die eine thermische Verbindung zwischen der Abgasleitung 28 einerseits und der Brennstoffzuleitung 25 sowie der Oxidationsmittelzuleitung 26 andererseits herstellen.

Beim Betrieb der Vorrichtung 1 wird Brennstoff, beispielsweise Öl, Erdgas oder ein niederkalorischer Brennstoff, über die Brennstoffzuleitung 25 und den Brennstoffkanal 11 sowie Oxidationsmittel, beispielsweise Sauerstoff mit einer Reinheit von wenigstens 95 Vol.-%, über die Oxidationsmittelzuleitung 26 und die Oxidationsmittelkanäle 12, 13 in den Reaktionsraum 15 eingetragen. Die Eintragsgeschwindigkeit beider Medien liegt dabei im Unterschallbereich und beträgt beispielsweise 0,5 Mach. Im Reaktionsraum 15 kommt es innerhalb des Flammenrohrs 16 zum Oxidieren des Brennstoffs. Das dabei erzeugte Brenngas wird - in Fig. 1 durch Pfeile angedeutet - über den Ringspalt 17 zurückgeführt, wobei ein Teilstrom des Brenngases in die Lücke zwischen den Mündungsöffnungen der Kanäle 11, 12, 13 und dem Flammenrohr 16 gelangt und gemeinsam mit den Reaktionspartnern erneut dem Reaktionsraum 15 zugeführt wird (Rezirkulation). Aufgrund der teilweisen Rezirkulation des Brenngases kann es auch zur Ausbildung einer flammenlosen Oxidation des zugeführten Brennstoffs im Reaktionsraum 15 kommen.

Der übrige Teilstrom des Brenngases wird über den Abzugskanal 18, den Abgasstutzen 21 und die Abgasleitung 28 abgeführt. Das Brenngas besitzt beim Einströmen in den Abzugskanal 18 mit einer Temperatur von ca. 1400°C eine hohe Wärmeenergie, die in den Rekuperatoren 19, 29 in zwei aufeinanderfolgenden Stufen weitgehend auf den Brennstoff und das Oxidationsmittel übertragen wird. Durch diese zweistufige Ausgestaltung der Rekuperation wird bis unmittelbar vor der Zuführung in den Reaktionsraum die Temperatur des Oxidationsmittels auf beispielsweise 1000°C und die des Brennstoffes auf beispielsweise 400°C erhöht. Zugleich sinkt die Temperatur des Abgases bis zu seinem Austritt aus dem zweiten Rekuperator 29 von anfangs, d.h. unmittelbar nach seiner Entstehung im Reaktionsraum 15, über 1400°C auf unter 100°C, beispielsweise 80°C und darunter. Aufgrund der hohen Wärmeübertragung und des Umstandes, dass neben dem Oxidationsmittel auch der Brennstoff vorgewärmt wird, ergibt sich eine Effizienz der Verbrennung, bezogen auf den Heizwert, von über 100%. Der erfindungsgemäße Brenner 6 zeichnet sich somit durch eine große Effizienz und darüber hinaus durch niedrige NOₓ - Werte im Abgas aus.

Anstelle der in Fig. 1 gezeigten Ausführungsform können separate Oxidationsmittelkanäle für ein erstes und ein zweites Oxidationsmittel vorgesehen sein, die in axialer Hinsicht beabstandet voneinander ausmünden und einen Brennerbetrieb in gestufter Verbrennung ermöglichen. Bei dem primären und dem sekundären Oxidationsmittel kann es sich dabei um das gleiche Oxidationsmittel handeln, beispielsweise Sauerstoff, oder um unterschiedliche Oxidationsmittel, beispielsweise Luft als primäres Oxidationsmittel und Sauerstoff als sekundäres Oxidationsmittel. Bei der gestuften Verbrennung erfolgt zunächst eine Vermischung des Brennstoffs mit dem primären Oxidationsmittel im unterstöchiometrischen Verhältnis. Aufgrund niedrigen Oxidationsmittelangebots kann nur ein Teil des Brennstoffs mit dem primären Oxidationsmittel verbrennen. Das Gemisch aus Brenngas und unverbranntem Brennstoff gelangt in einen vorderen Abschnitt des Brenners und wird dort mit dem sekundären Oxidationsmittel beaufschlagt, mittels dessen der noch unverbrannte Brennstoff oxidiert wird. Die gestufte Verbrennung ermöglicht eine gleichmäßigere Verteilung der Wärmeentwicklung über die Längserstreckung des Reaktionsraumes, also, im Falle der Ausgestaltung als Strahlheizrohr, innerhalb der Längserstreckung des Flammrohrs.

### Bezugszeichenliste

- 1: Ofen
- 2: Ofenraum
- 3: Ofenwand

- 5: Durchgangsöffnung
- 6: Brenner
- 7: Mantelrohr

- 9: Vorderwand

- 11: Brennstoffkanal
- 12: Oxidationsmittelkanal
- 13: Oxidationsmittelkanal

- 15: Reaktionsraum
- 16: Flammenrohr
- 17: Ringspalt
- 18: Abzugskanal
- 19: Rekuperator

- 21: Abgasstutzen
- 22: Anschluss für Brennstoffzuleitung
- 23: Anschluss für Oxidationsmittelleitung
- 24: Anschluss für Oxidationsmittelleitung
- 25: Brennstoffzuleitung
- 26: Oxidationsmittelzuleitung

- 28: Abgasleitung
- 29: Rekuperator

## Patentansprüche

1. Vorrichtung zum Oxidieren von Brennstoffen, mit einem in eine Wand (3) eines Ofenraums (2) eingebauten Brenner (6), der einen in einen Reaktionsraum (15) einmündenden Brennstoffkanal (11) und wenigstens einen
Oxidationsmittelkanal (12, 13) zum Zuführen von Brennstoff bzw. Oxidationsmittel, einen Brenngasabzugskanal (18) zum Abführen von Brenngas aus dem Reaktionsraum (15) und einen den Brenngasabzugskanal (18) mit dem Oxidationsmittelkanal (12, 13) und mit dem Brennstoffkanal (11) thermisch verbindende Wärmetauscherflächen umfassenden ersten Rekuperator (19) aufweist,
wobei der Brenner (6) außerhalb des Ofenraums (2) an eine mit dem Brenngasabzugskanal (18) strömungsverbundene Abgasleitung (28), eine mit dem Brennstoffkanal (11) strömungsverbundene Brennstoffzuleitung (25) und eine mit dem Oxidationsmittelkanal (12, 13) strömungsverbundene Oxidationsmittelzuleitung (26) angeschlossen ist, wobei die Abgasleitung (28) mit der Oxidationsmittelzuleitung (26) und mit der Brennstoffzuleitung (25) an in einem zweiten Rekuperator (29) vorgesehenen Wärmetauscherflächen thermisch miteinander verbunden sind.

2. Vorrichtung nach Anspruch 1, wobei der Brenner 6 in einem ein Strahlheizrohr angeordnet ist.

3. Vorrichtung.nach,Anspruch 1 oder 2, wobei als Oxidationsmittel Sauerstoff vorgesehen ist.

4. Vorrichtung nach einem der vorhergehenden Ansprüche, wobei als Brennstoff ein niederkalorischer Brennstoff vorgesehen ist.

5. Vorrichtung nach einem der vorhergehenden Ansprüche, wobei der Brenner (6) zwecks Ermöglichung einer gestuften Verbrennung Kanäle (12, 13) für ein
erstes und ein zweites Oxidationsmittel aufweist, die jeweils mit Oxidationsmittelzuführungen für ein erstes bzw. zweites Oxidationsmittel strömungsverbunden sind.

6. Verfahren zum Oxidieren von Brennstoffen, bei dem zwecks Erwärmung eines Ofenraums (2) Brennstoff und Oxidationsmittel durch einem Brenner (6) zugeordnete Zuführungskanäle (11, 12, 13)'für Brennstoff bzw. Sauerstoff einem Reaktionsraum (15) zugeführt und dort zur Reaktion gebracht werden und das bei der Reaktion entstehende Brenngas über einen Brenngasabzugskanal (18) abgeführt wird, und an Wärmetauscherflächen eines innerhalb des Brenners (6) angeordneten ersten Rekuperators (19) die Wärme des Brenngases teilweise auf das dem Reaktionsraum (15) zuzuführende Oxidationsmittel und auf den Brennstoff übertragen wird, wobei das im Rekuperator (19) abgekühlte Brenngas außerhalb des Ofenraums (2) in einem zweiten Rekuperator (29) vorgesehenen Wärmetauscherflächen zugeführt und dort in Wärmeaustausch mit dem dem ersten Rekuperator (19) zuzuführenden Oxidationsmittel und dem Brennstoff gebracht werden.

7. Verfahren nach Anspruch 6, wobei das im Reaktionsraum (15) erzeugte Brenngas teilweise dem in den Reaktionsraum (15) zugeführten Oxidationsmittel und/oder dem Brennstoff zugemischt und auf diese Weise zur Rezirkulation gebracht werden.

8. Verfahren nach einem der Ansprüche 6 oder 7, wobei innerhalb des Reaktionsraums (15) eine flammenlose Verbrennung erfolgt.

9. Verfahren nach einem der Ansprüche 6 bis 8, wobei das Eindüsen von Brennstoff und/oder Oxidationsmittel in den Reaktionsraum (15) mit Unterschall erfolgt.

10. Verfahren nach einem der Ansprüche 6 bis 9, wobei das Oxidationsmittel auf mindestens 1000°C und der Brennstoff auf mindestens 400°C vorgewärmt werden.

11. Verfahren nach einem der Ansprüche 6 bis 10, wobei das Brenngas durch den Wärmetausch mit dem Oxidationsmittel und/oder dem Brennstoff im ersten Rekuperatur (19) und im zweiten Rekuperator (29) auf eine Temperatur von weniger als 100°C abgekühlt wird.

## Claims

1. Apparatus for oxidizing fuels having installed in a wall (3) of a furnace space (2) a burner (6) comprising a fuel channel (11), which opens into a reaction space (15), and at least one oxidant channel (12, 13) for supplying fuel and oxidant respectively, a combustion gas takeoff channel (18) for discharging combustion gas from the reaction space (15) and a first recuperator (19) comprising heat exchanger surfaces which thermally connect the combustion gas takeoff channel (18) to the oxidant channel (12, 13) and to the fuel channel (11), wherein
the burner (6) outside the furnace space (2) is connected to an offgas conduit (28) fluidically connected to the combustion gas takeoff channel (18), to a fuel feed (25) fluidically connected to the fuel channel (11) and to an oxidant feed (26) fluidically connected to the oxidant channel (12, 13), wherein the offgas conduit (28), the oxidant feed (26) and the fuel feed (25) are thermally connected to one another over heat exchanger surfaces provided in a second recuperator (29).

2. Apparatus according to Claim 1, wherein the burner 6 is arranged in a radiant heating tube.

3. Apparatus according to Claim 1 or 2, wherein the oxidant provided is oxygen.

4. Apparatus according to any of the preceding claims, wherein the fuel provided is a low calorific value fuel.

5. Apparatus according to any of the preceding claims, wherein to allow a staged combustion the burner (6) comprises channels (12, 13) for a first and a second oxidant which are fluidically connected to oxidant feeds for a first and second oxidant respectively.

6. Process for oxidizing fuels where to heat a furnace space (2), via feed channels (11, 12, 13) for fuel/oxygen which are assigned to a burner (6), fuel and oxidant are supplied to a reaction space (15) and brought to reaction there and the combustion gas formed in the reaction is discharged via a combustion gas takeoff channel (18) and over heat exchanger surfaces of a first recuperator (19) arranged inside the burner (6) the heat of the combustion gas is partly transferred to the oxidant to be supplied to the reaction space (15) and to the fuel, wherein outside the furnace space (2) the combustion gas cooled in the recuperator (19) is supplied to heat exchanger surfaces provided in a second recuperator (29) and is there brought into heat exchange with the oxidant to be supplied to the first recuperator (19) and with the fuel.

7. Process according to Claim 6, wherein the combustion gas generated in the reaction space (15) is partly admixed with the oxidant supplied into the reaction space (15) and/or the fuel and thus recirculated.

8. Process according to either of Claims 6 or 7, wherein flameless combustion is effected inside the reaction space (15).

9. Process according to any of Claims 6 to 8, wherein the injection of fuel and/or oxidant into the reaction space (15) is effected subsonically.

10. Process according to any of Claims 6 to 9, wherein the oxidant is preheated to at least 1000°C and the fuel is preheated to at least 400°C.

11. Process according to any of Claims 6 to 10, wherein the combustion gas is cooled to a temperature of less than 100°C by the heat exchange with the oxidant and/or the fuel in the first recuperator (19) and in the second recuperator (29).

## Revendications

1. Dispositif destiné à l'oxydation de combustibles, comportant un brûleur (6) incorporé dans une paroi (3) d'une chambre de four (2), qui comporte un canal de combustible (11) débouchant dans une chambre de réaction (15) et au moins un canal d'oxydant (12, 13) destiné à l'introduction de combustible ou, respectivement, d'oxydant, un canal d'évacuation de gaz de combustion (18) destiné à évacuer le gaz de combustion de la chambre de réaction (15) et un premier récupérateur (19) comprenant des surfaces d'échange thermique mettant en connexion thermique le canal d'évacuation de gaz de combustion (18) avec le canal d'oxydant (12, 13) et avec le canal de combustible (11),
dans lequel le brûleur (6) est raccordé, à l'extérieur de la chambre de four (2) à un conduit de gaz rejeté (28) en communication fluidique avec le canal d'évacuation de gaz de combustion (18), un conduit d'arrivée de combustible (25) en communication fluidique avec le canal de combustible (11) et un conduit d'arrivée d'oxydant (26) en communication fluidique avec le canal d'oxydant (12, 13), le conduit de gaz rejeté (28) étant en connexion thermique à la fois avec le conduit d'arrivée d'oxydant (26) et avec le conduit d'arrivée de combustible (25) sur des surfaces d'échange thermique prévues dans un deuxième récupérateur (29).

2. Dispositif selon la revendication 1, dans lequel le brûleur 6 est disposé dans un tube radiant.

3. Dispositif selon la revendication 1 ou 2, dans lequel de l'oxygène est prévu en tant qu'oxydant.

4. Dispositif selon l'une quelconque des revendications précédentes, dans lequel un combustible à faible pouvoir calorifique est prévu en tant que combustible.

5. Dispositif selon l'une quelconque des revendications précédentes, dans lequel le brûleur (6) comporte, pour permettre une combustion échelonnée, des canaux (12, 13) pour un premier et un deuxième oxydant, qui sont chacun en communication fluidique avec des conduits d'arrivée d'oxydant pour un premier ou, respectivement, un deuxième oxydant.

6. Procédé pour l'oxydation de combustibles, dans lequel, pour le chauffage d'une chambre de four (2), un combustible et un oxydant sont amenés à une chambre de réaction (15) par des canaux d'alimentation (11, 12, 13) pour combustible ou, respectivement, oxygène, affectés à un brûleur (6) et y sont mis en réaction, et le gaz de combustion formé lors de la réaction est évacué par un canal d'évacuation de gaz de combustion (18), et la chaleur du gaz de combustion est partiellement transférée, sur des surfaces d'échange thermique d'un premier récupérateur (19) disposé à l'intérieur du brûleur (6), à l'oxydant à envoyer à la chambre de réaction (15), dans lequel le gaz de combustion refroidi dans le récupérateur (19) est envoyé, à l'extérieur de la chambre de four (2), à des surfaces d'échange thermique prévues dans un deuxième récupérateur (29) et, avec l'oxydant à envoyer au premier récupérateur (19) et le combustible ils y sont mis en échange thermique.

7. Procédé selon la revendication 6, dans lequel le gaz de combustion produit dans la chambre de réaction (15) est en partie mélangé avec l'oxydant envoyé dans la chambre de réaction (15) et/ou le combustible et de cette façon remis en circulation.

8. Procédé selon l'une quelconque des revendications 6 et 7, dans lequel une combustion sans flamme à lieu à l'intérieur de la chambre de réaction (15).

9. Procédé selon l'une quelconque des revendications 6 à 8, dans lequel l'injection de combustible et/ou d'oxydant dans la chambre de réaction (15) s'effectue avec ultrasons.

10. Procédé selon l'une quelconque des revendications 6 à 9, dans lequel on préchauffe l'oxydant à au moins 1 000 °C et le combustible à au moins 400 °C.

11. Procédé selon l'une quelconque des revendications 6 à 10, dans lequel le gaz de combustion est refroidi jusqu'à une température inférieure à 100 °C par l'échange thermique avec l'oxydant et/ou le combustible dans le premier récupérateur (19) et dans le deuxième récupérateur (29).
